# EUROPÄISCHE PATENTSCHRIFT

(11) **EP 0 622 271 B1**
(45) Veröffentlichungstag und Bekanntmachung des Hinweises auf die Patenterteilung: **03.12.1997**
(21) Anmeldenummer: 94102217.0
(22) Anmeldetag: 14.02.1994
(51) Int. Cl.: B60Q 3/02, B60Q 9/00

(54) **Schaltanordnung für die Innenbeleuchtung von Kraftfahrzeugen**
Switching device for lighting the interior of a motor vehicle
Pour l'éclairage intérieur d'un véhicule dispositif de commande

(30) Priorität: 26.03.1993 DE 4309817
(43) Veröffentlichungstag der Anmeldung: 02.11.1994
(73) Patentinhaber: Bayerische Motoren Werke Aktiengesellschaft, 80788 München (DE)
(72) Erfinder: Wagner, Armin, D-85757 Karlsfeld (DE)

(56) Entgegenhaltungen:
- DE-A- 3 204 837
- DE-A- 3 218 479
- FR-A- 2 451 845
- US-A- 5 047 688

## Beschreibung

Die Erfindung bezieht sich auf eine Schaltanordnung für die Innenbeleuchtung für Kraftfahrzeugen nach dem Oberbegriff des Patentanspruchs 1.

Ein derartige Schaltanordnung ist aus der DE - PS 28 54 729 bekannt. Diese Schaltanordnung ist in den Fahrzeugen der Bayerische Motoren Werke AG verwendet. Nach dem Ausführungsbeispiel und der Verwendung der Schaltanordnung befindet sich in der Nähe eines der Innenbeleuchtungskörper ein manuell betätigbarer Schalter, der drei Schaltstellungen besitzt. In der einen schaltet er das Steuergerät für die Durchführung des Schaltprogramms. In der anderen wird die Innenbeleuchtung bleibend eingeschaltet. In der dritten ist die Innenbeleuchtung ausgeschaltet. Der durch das Schaltprogramm bedingte Komfort, wonach nach Verlassen des Kraftfahrzeugs bzw. nach dem Einsteigen in das Kraftfahrzeugs die Innenbeleuchtung nach der endgültigen Schließung der Fahrzeugtüren noch für eine gewisse Zeit eingeschaltet bleibt, bringt es mit sich, daß der Fahrzeugbenutzer bei Schließen der Fahrzeugtüren nicht erkennt, ob das Schaltprogramm eingestellt ist und das Innenlicht selbstätig ausgeschaltet wird oder aber ob das Innenlicht bleibend eingeschaltet ist. Auch der Befehlsgeber gibt dem unkundigen Fahrzeugbenutzer keinen Hinweis. Hinzu kommt ein weiteres Problem, das sich aus der schaltungstechnischen Realisierung der Schaltanordnung ergibt. Der beschriebene Schalter besitzt einen Anschluß am Pluspol des Bordnetzes. Dies bedingt eine aufwendige Leitungsführung, ein hohes Gewicht der Stromführungsleitung sowie besondere Isolationmaßnahmen.

Entsprechendes gilt für die DE 32 18 479 A1. Dort ist ein hoch belasteter Umschalter vorgesehen, mit dem zwischen einem Steuerprogramm und dem Dauerbetrieb umgeschaltet werden kann. Auch dort besteht die Notwendigkeit, eine hoch belastete elektrische Leitung zum Umschalter hin zu verlegen.

Aus der US 5047688 A ist eine Innenlichtschaltung bekannt, bei dem die Einschaltung und die Ausschaltung durch einen Befehlsgeber veranlaßt wird, wenn das Licht ausgeschaltet bzw. eingeschaltet ist. Beide Schaltvorgänge erfolgen programmgesteuert. Dabei kommt es für den Benutzer zu einer nicht eindeutigen und unvorhersehbaren Arbeitsweise der Programmsteuerung, da beispielsweise bei Schließen der Tür bzw. Zündkreises in Verbindung mit dem vorhergehenden bzw. nachfolgenden Betätigen des Befehlsgeber für den Fahrzeugbenutrer nicht erkennbar ist, ob das Ausschalten der Innenbeleuchtung durch die Programmsteuerung oder durch das Betätigen des Befehlsgebers vetursacht ist. Zudem handelt es sich beim Befehlsgeber um einen bistabilen Schalter, der auf Betriebsspannung liegt.

Der Erfindung liegt die Aufgabe zugrunde, eine Schaltanordnung der eingangs genannten Art zu schaffen, bei der mit geringem schaltungstechnischen Aufwand auf eindeutige Weise ein Wechsel der Betriebsart der Innenbeleuchtung durchführbar ist.

Die Erfindung löst diese Aufgabe durch die kennzeichnende Merkmale des Patentanspruchs 1.

Nunmehr ist es lediglich erforderlich, eine niedrigbelastete Steuerleitung zum Befehlsgeber hin zu verlegen. Zweifel über die wirksame Betriebsart der Innenbeleuchtung ergeben sich nicht mehr, da grundsätzlich das Schaltprogramm eingestellt ist und nur bei einer willkürlichen Betätigung des Befehlsgebers die Innenbeleuchtung bleibend eingeschaltet ist. Sofern der Fahrzeugbenutzer also vor dem Verlassen des Kraftfahrzeugs nicht bewußt den Befehlsgeber betätigt, kann er sicher sein, daß die Innenbeleuchtung nach dem Verlassen des Kraftfahrzeugs entsprechend dem Schaltprogramm ausgeschaltet wird. Hat er hingegen den Befehlsgeber betätigt, so kann je nach Ausführungsform das Innenlicht auch nach dem Verlassen des Kraftfahrzeugs oder wenigstens bis dahin bleibend eingeschaltet sein. In letzterem Fall kann das Licht dann entsprechend dem Schaltprogramm nach dem Verlassen des Kraftfahrzeugs ausgeschaltet werden.

Damit ergeben sich erhebliche Vorteile hinsichtlich des Gewichts, der elektrischen Sicherheit sowie des Bedienungskomforts für den Fahrzeugbenutzer.

Die Realisierung der Erfindung ist auf verschiedene Weise möglich. So kann die Einschaltzeit der Innenbeleuchtung bei der Betriebsart "Dauer-ein" zeitlich begrenzt sein. Es hat sich gezeigt, daß hierfür ein Zeitraum von beispielsweise 15 Minuten nach dem endgültigen Verlassen des Kraftfahrzeugs bzw. nach dem Einschalten dieser Betriebsart sinnvoll ist.

Die zeitliche Begrenzung kann auch auf einen kürzeren Wert eingestellt werden, nämlich dann, wenn aufgrund des Verhalten des Fahrzeugbenutzers erkennbar ist, daß er die Innenbeleuchtung nicht mehr benötigt. Hierfür kann es vorteilhaft sein, die Innenbeleuchtung bei Aufgabe eines Verriegelungsbefehls für eine Fahrzeugtür bzw. für die Zentralverriegelungsanlage des Kraftfahrzeugs sofort bzw. um einige Sekunden zeitlich verzögert auszuschalten.

Alternativ oder ergänzend kann dieses Ausschalten auch erfolgen, wenn sich das Bordnetz des Kraftfahrzeugs in einem Schaltzustand befindet, der für das Außerbetriebsetzen charakteristisch ist. Beispielsweise liegt dieser Fall dann vor, wenn die Zündung des Kraftfahrzeugs ausgeschaltet ist. Auch hier kann das Ausschalten wiederum zeitlich verzögert, beispielsweise auch nach dem endgültigen Schließen der Fahrzeugtüren, vorgenommen werden.

Zusätzlich zu dem Einstellen der Betriebsart "Dauer-ein" für die Innenbeleuchtung kann es auch möglich sein, durch nochmaliges Betätigen des Befehlsgebers einen Schaltbefehl auf das Steuergerät zu geben, wonach dieses erneut in die Betriebsart Schaltprogramm umschaltet. Diese Maßnahme bietet sich dann an, wenn der Fahrzeugbenutzer beispielsweise bei stehendem Kraftfahrzeug die bleibende Einschaltung der Innenbeleuchtung für nicht mehr notwendig erachtet, andererseits aber nicht beabsichtigt, das Kraftfahrzeug zu verlassen.

Zusätzlich kann es von Vorteil sein, wenn die Innenbeleuchtung bleibend ausschaltbar ist, obwohl beispielsweise die Fahrzeugtüren geöffnet sind. Ein derartiger Fall liegt bei einem Werkstattaufenthalt des Kraftfahrzeugs vor. Ergänzend kann hierzu mit Hilfe des selben Befehlsgebers ein andersartiger Schaltbefehl auf das Steuergerät aufgegeben werden. Anstelle eines hierfür vorgesehenen zusätzlichen Befehlsgebers ergibt sich damit ein erheblicher Vorteil hinsichtlich der Anzahl der erforderlichen Bauteile.

Bei diesem andersartigen Schaltbefehl kann es sich beispielsweise um ein mehrmaliges, kurzzeitiges Betätigen des Befehlsgebers in seine Schaltstellung oder aber um eine Einstellung des Befehlsgebers in seiner Schaltstellung für eine definierte Zeit handeln. Letzteres kann beispielsweise dadurch realisiert werden, daß hierfür der Befehlsgeber eine Zeit von einigen Sekunden, d.h. eine für übliche Befehl- und Bedienvorgänge völlig unübliche Zeit in seiner Befehlsstellung verbleibt und anschließend daran aus dieser wieder in seine Grundstellung zurückgenommen wird.

Der Befehlsgeber selbst kann ein Schalter beliebiger Bauart sein. Gegenüber der Ausführung des Schalters als Wippschalter bietet die Ausführung des Schalters als Tastschalter den Vorteil des einfachen Aufbaus und der leichten Bedienbarkeit.

Schließlich kann der Schalter, wie an sich bekannt, mit einem Innenbeleuchtungskörper intergriert sein. Dadurch ergibt sich Vorteile hinsichtlich der Leitungskonfiguration.

In der Zeichnung ist ein Ausführungsbeispiel der Erfindung dargestellt. Es zeigt
- Fig.1: eine Schaltanordnung gemäß dem Stand der Technik
- Fig.2: eine Schaltanordnung gemäß der Erfindung.

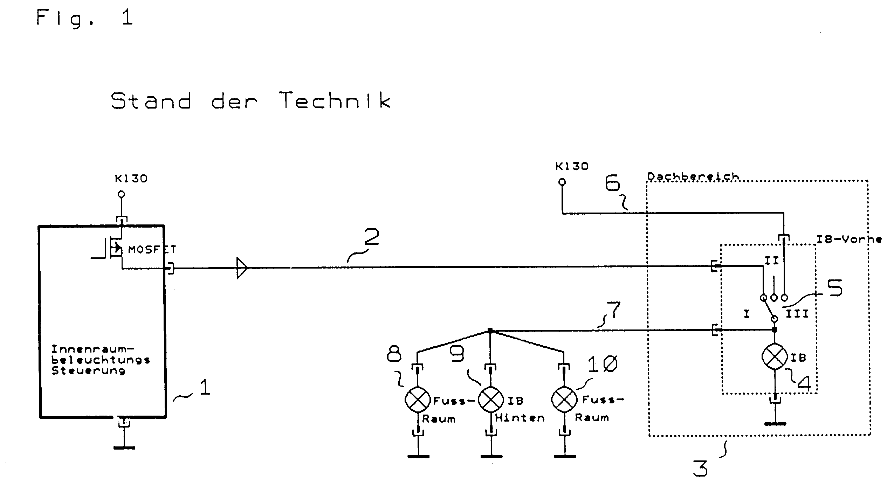

Die in Fig.1 gezeigte Schaltanordnung enthält ein Steuergerät 1, das mit dem Pluspol des Bordnetzes (Kl30) sowie der Masse des Bordnetzes verbunden ist. Vom Steuergerät 1 führt eine Leitung 2 zu einer Baueinheit 3, die sich im Dachbereich (nicht dargestellt) im Inneren des Kraftfahrzeugs befindet. Die Baueinheit enthält im wesentlichen einen Beleuchtungskörper 4 als Teil der Innenbeleuchtung sowie einen Schalter 5, der in drei verschiedenen Schaltstellungen I, II und III einstellbar ist. Ferner führt eine Leitung 6 ebenfalls zum Pluspol des Bordnetzes. Von der Baueinheit 3 geht eine weitere Leitung 7 ab. Sie dient zur Stromversorgung von weiteren Beleuchtungskörpern 8, 9 und 10 der Innenbeleuchtung, die sich im Fußraum (8 und 10) sowie im hinteren Teil des Kraftfahrzeug-Innenraums (9) befinden.

Mit Hilfe des Schalters 5 ist ein Schaltprogramm für die Innenbeleuchtungs-Steuerung, das sich im Steuergerät 1 befindet, einstellbar. In der Stellung II ist die Innenbeleuchtung bleibend ausgeschaltet. In der Stellung III ist die Innenbeleuchtung hingegen bleibend eingeschaltet. Insgesamt führen zur Baueinheit 3 drei Leitungen, die sämtlich die Stromversorgung der Beleuchtungskörper 8 bis 10 übernehmen.

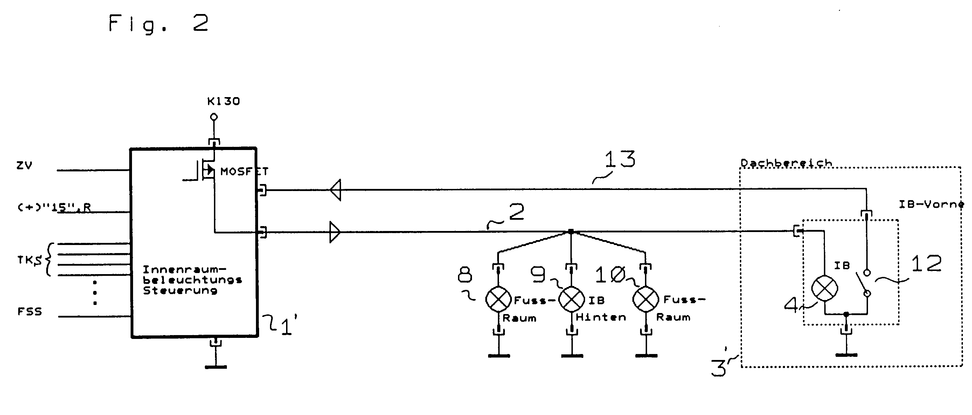

Im Gegensatz dazu ist bei der erfindungsgemäßen Schaltanordnung, wie sie im Figur 2 dargestellt ist, nur noch eine Stromleitung 2 vorgesehen, die mit ihrem zur Baueinheit 3' entsprechend der Baueinheit 3 führenden Abschnitt nur noch den Beleuchtungskörper 4 mit Strom versorgt . An der Leitung 2 sind in Stromrichtung gesehen vor der Baueinheit 3' die Beleuchtungskörper 9 bis 11 unmittelbar angeschlossen. Die Baueinheit 3' enthält nunmehr nur noch einen Tastschalter 12, der eine niedrig belastete Steuerleitung 13 zwischen dem Steuergerät 1' und der Fahrzeugmasse schaltet.

Über den Tastschalter 12 lassen sich Schaltbefehle aufgeben, wie im folgenden erläutert wird.

Es sei zunächst der Fall angenommen, bei dem die übliche Betriebsart "Schaltprogramm" eingestellt ist. Der Tastschalter 12 befindet sich dazu in der eingezeichneten Lage. Entsprechend dem Schaltprogramm wird die Innenbeleuchtung beim Ein- und Aussteigen z.B. für unterschiedlich lange Nachlaufzeiten eingeschaltet und ergänzend dieses Einschalten vom Zustand der Fahrzeug-Beleuchtungsanlage abhängig gemacht (vgl. hierzu bei-spielsweise die DE - OS 36 28 345). Wird nun der Tastschalter 12 kurzzeitig betätigt, d.h. über die Leitung 13 kurzzeitig (einige msec bzw. zehntel- sec.) auf Massepotential gelegt, so schaltet das Steuergerät 1' anstelle des Schaltprogramms die Innenbeleuchtungskörper 4 sowie 9 bis 11 bleibend ein. Wird erneut ein derartiger Schaltbefehl mit Hilfe des Tastschalters 12 ausgelöst, so schaltet das Steuergerät 1' erneut das üblich Schaltprogramm ein. Ferner kann durch Halten des Tastschalters 12 in der Betätigungsstellung für eine Zeit von beispielsweise 3 Sek. das Steuergerät 1' die Innenbeleuchtung bleibend ausschalten.

Es sei der eingangs genannte Fall angenommen, bei dem die Innenbeleuchtung nach kurzzeitigen Betätigen des Tastschalters 12 bleibend eingeschaltet ist. Das Steuergerät 1' kann dann bei entsprechender Beschaltung, bei Vorliegen eines Verriegelungsbefehls für die Fahrzeugtüren - in der Fig. mit Hilfe eines ZV bezeichneten Eingangs angedeutet, die Innenbeleuchtung nach dem Vorliegen dieses Schaltbefehls um einige Sekunden verzögert ausschalten. Ebenso ist es möglich, bei Unterbrechen des Zündstromkreises -angedeutet durch die Bezeichnung "15" bzw."R"-die zunächst bleibend eingeschaltete Innenbeleuchtung nach einer gewissen Zeit von beispielsweise 10 sec ausschalten. Dies kann auch in Abhängigkeit vom Schließen der Fahrzeugtüren erfolgen, die mit nicht dargestellten Türkontaktschaltern versehen sind. Diese Schalter sind über Eingänge TKS mit dem Steuergerät 1' verbunden. Ergänzend kann auch das Signal eines nicht dargestellten Funkschließsystems, angedeutet durch einen Eingang FSS des Steuergeräts 1' die Innenbeleuchtung ausgeschaltet werden.

Damit ergibt sich eine deutliche Verbesserung der Funktionalität bei gleichzeitiger Verringerung des konstruktiven Aufwands.

## Patentansprüche

1. Schaltanordnung für die Innenbeleuchtung von Kraftfahrzeugen, bei der ein Steuergerät (1') die Innenbeleuchtung abhängig von Betriebszustandsparametem des Kraftfahrzeugs selbsttätig nach einem vorgegebenen Schaltprogramm ein- und ausschaltet, dadurch gekennzeichnet, daß ein willkürlich betätigbarer elektrischer Befehlsgeber (12) vorhanden ist, der mit dem Steuergerät (1') über eine niedrig belastete Steuerleitung (13) verbunden ist, und daß das Steuergerät bei Ansteuerung durch den Befehlsgeber das Schaltprogramm aus- und die Innenbeleuchtung bleibend einschaltet.

2. Schaltanordnung nach Anspruch 1, dadurch gekennzeichnet, daß die Einschaltzeit der Innenbeleuchtung zeitlich begrenzt ist.

3. Schaltanordnung nach Anspruch 1 oder 2 dadurch gekennzeichnet, daß die Innenbeleuchtung bei Verriegeln der Fahrzeugtüren ausgeschaltet wird.

4. Schaltanordnung nach einem der Ansprüche 1 bis 3, dadurch gekennzeichnet, daß die Innenbeleuchtung ausschaltbar ist, wenn ein für das Außerbetriebsetzen des Kraftfahrzeugs repräsentativer Schaltzustand des Bordnetzes vorliegt.

5. Schaltanordnung nach einem der Ansprüche 1 bis 4, dadurch gekennzeichnet, daß bei erneutem Ansteuern des Steuergeräts durch den Befehlsgeber wieder des Schaltprogramm einstellbar ist.

6. Schaltanordnung nach einem der Ansprüche 1 bis 5, dadurch gekennzeichnet, daß bei Aufgabe eines andersartigen Schaltbefehl durch den Befehlsgeber (12) die Innenbeleuchtung bleibend ausschaltbar ist.

7. Schaltanordnung nach Anspruch 6, dadurch gekennzeichnet, daß der Schaltbefehl durch eine Einstellung des Befehlsgebers (12) für eine vorgegebene Schaltzeit von einigen Sekunden auslösbar ist.

8. Schaltanordnung nach einen der Ansprüche 1 bis 7, dadurch gekennzeichnet, daß der Befehlsgeber (1) ein Tastschalter ist.

9. Schaltanordnung nach einen der Ansprüche 1 bis 8, dadurch gekennzeichnet, daß der Befehlsgeber (12) mit einem Innenbeleuchtungkörper (4) intergriert ist.

## Claims

1. A circuit arrangement for internal lighting for motor vehicles, in which a control equipment (1') switches the internal lighting on and off automatically following a prescribed switching programme, depending on the parameters of the operational condition of the vehicle, **characterised in that** a selectively operable electrical controller (12) is present, which is connected to the control equipment (1') via a lightly loaded control wire, and that the control equipment, on command from the controller, switches the switching program off and the internal lighting continuously on.

2. A circuit arrangement according to Claim 1, **characterised in that** the switched on period of the internal lighting is limited in time.

3. A circuit arrangement according to Claim 1 or 2, **characterised in that** the internal lighting is switched off on locking the vehicle doors.

4. A circuit arrangement according to one of the Claims 1 to 3, **characterised in that** the internal lighting can be switched off, if a representative switching condition of the on-board circuit is present for the removal from service of the vehicle.

5. A circuit arrangement according to one of the Claims 1 to 4, **characterised in that** the switching programme can be restored by a fresh command to the control equipment from the controller.

6. A circuit arrangement according to one of the Claims 1 to 5, **characterised in that** the internal lighting can be switched continuously off by the activation of a different type of command from the contoller (12).

7. A circuit arrangement according to Claim 6, **characterised in that** the switching command can be initiated by activation of the controller (12) for a prescribed switching time of a few seconds,

8. A circuit arrangement according to one of the Claims 1 to 7, **characterised in that** the controller (12) is a push-button switch.

9. A circuit arrangement according to one of the Claims 1 to 8, **characterised in that** the controller (12) is integrated into an internal lighting unit (4).

## Revendications

1. Circuit pour l'éclairage intérieur de véhicules automobiles, dans lequel un appareil de commande (1') branche et coupe l'éclairage intérieur selon les paramètres d'état de fonctionnement du véhicule, de manière automatique selon un programme prédéterminé,
caractérisé en ce qu'il comprend
• un générateur d'ordre (12), électrique, à commande arbitraire, relié à l'appareil de commande (1') par une ligne de commande (13) à faible charge et
• l'appareil de commande actionné par le générateur d'ordre coupe le programme de commutation et branche l'éclairage interne de manière permanente.

2. Circuit selon la revendication 1,
caractérisé en ce que
le temps de branchement de l'éclairage interne est limité.

3. Circuit selon la revendication 1 ou 2,
caractérisé en ce que
l'éclairage interne est coupé par le verrouillage des portières du véhicule.

4. Circuit selon l'une des revendications 1 à 3,
caractérisé en ce que
l'éclairage interne est coupé lorsqu'il existe un état de commutation du réseau embarqué représentatif de la mise hors service du véhicule.

5. Circuit selon l'une des revendications 1 à 4,
caractérisé en ce que
lorsque l'appareil de commande est de nouveau commandé par le générateur d'ordre, le programme de commutation est rétabli.

6. Circuit selon l'une des revendications 1 à 5,
caractérisé en ce que
à l'émission d'un ordre de commutation de nature différente par le générateur d'ordre (12), l'éclairage interne est coupé de manière permanente.

7. Circuit selon la revendication 6,
caractérisé en ce que
l'ordre de commutation est déclenché par un réglage du générateur d'ordre (12) pendant une durée de commutation prédéterminée de quelques secondes.

8. Circuit selon l'une des revendications 1 à 7,
caractérisé en ce que
le générateur d'ordre (12) est un commutateur à touche.

9. Circuit selon l'une des revendications 1 à 8,
caractérisé en ce que
le générateur d'ordre (12) est intégré à un élément d'éclairage interne (4).
